# EUROPEAN PATENT SPECIFICATION

(11) **EP 3 044 706 B1**
(45) Date of publication and mention of the grant of the patent: **28.09.2022**
(21) Application number: 14850422.8
(22) Date of filing: 06.05.2014
(51) Int. Cl.: G06F 16/2453

(54) **A METHOD OF OPTIMIZING QUERIES EXECUTION ON A DATA STORE**
VERFAHREN ZUR OPTIMIERUNG VON ABFRAGENAUSFÜHRUNG IN EINEM DATENSPEICHER
PROCÉDÉ POUR OPTIMISER L'EXÉCUTION DE REQUÊTES SUR UNE MÉMOIRE DE DONNÉES

(30) Priority: 03.10.2013 IN 4496CH2013
(43) Date of publication of application: 20.07.2016
(73) Proprietor: Huawei Cloud Computing Technologies Co., Ltd., Guizhou 550025 (CN)
(72) Inventor: PESALA, Ravindra, Bangalore Karnataka 560017 (IN); GARLA, Naganarasimha Ramesh, Bangalore Karnataka 560017 (IN); ZHANG, Yong, Shenzhen Guangdong 518129 (CN)
(74) Representative: Pfenning, Meinig & Partner mbB
(86) International application number: PCT/CN2014/076892
(87) International publication number: WO 2015/048925

(56) References cited:
- WO-A1-2009/003773
- WO-A2-02/067146
- CN-A- 102 663 114
- CN-A- 103 218 404
- US-A1- 2009 216 718
- M. Zukowski: "Cooperative Scans", , 11 September 2009 (2009-09-11), XP055276030, Retrieved from the Internet: URL:http://dare.uva.nl/document/2/68051 [retrieved on 2016-05-27]
- Georgios Giannikis ET AL: "SharedDB: Killing One Thousand Queries With One Stone", , 20 August 2013 (2013-08-20), XP055275857, Retrieved from the Internet: URL:https://web.archive.org/web/2013082012 3545/http://vldb.org/pvldb/vol5/p526_georg iosgiannikis_vldb2012.pdf [retrieved on 2016-05-27]

## Description

### TECHNICAL FIELD

The present invention relates to database technologies in the computer field. In particular, the present invention is related to a method of optimizing query execution on a data store, particularly big data store.

### BACKGROUND

Generally, Big Data comprises a collection of large and complex data stored in a Big Data Store (referred as data store). The large and complex data are stored in a form of data blocks which are generally indexed, sorted and compressed. The data store provides efficient tools to explore the data in the data store to provide response to one or more queries specified by a user. An example of the efficient tool is Online Analytical Processing (OLAP) tool to process OLAP based queries requested by the user. The tool helps in accessing the data from the data store which typically involves reading and decompressing the data from the data blocks that are usually known as scanning over the data store. Usually, scanning over the data store requires lots of disk operations, network input/output (I/O) operations and central processing unit (CPU) operations. In addition, one well-known problem of data store is that they tend to be extremely large, which causes heavy storage and performance problems. Thus, a scalable architecture of the data store is crucial in a Big Data environment. Hence, handling very large amounts of data along with processing the one or more queries specified by the user with a minimum scanning operation over the data store and minimum interactive response time involves great difficulty.

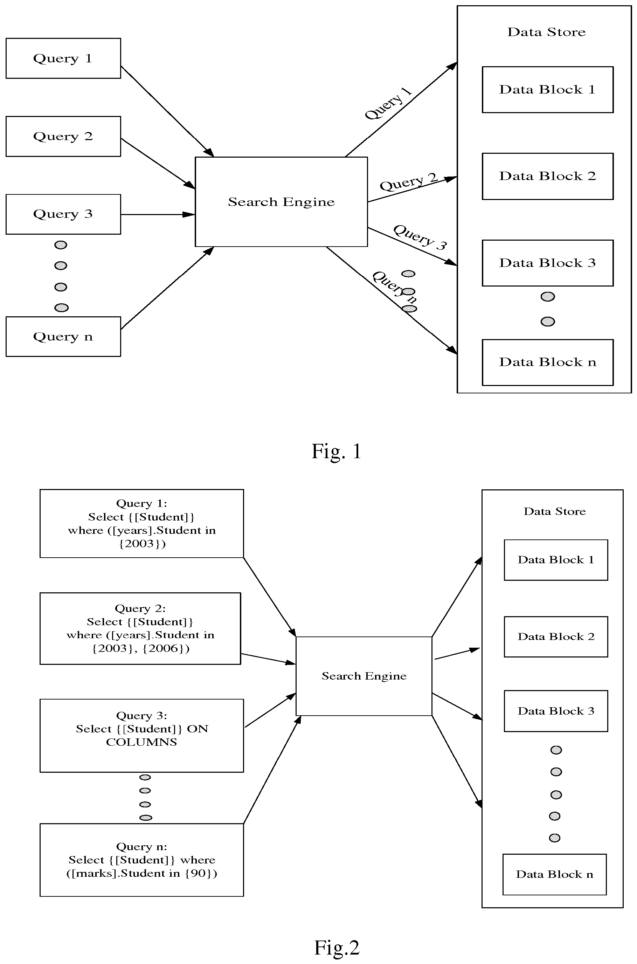

Typically, scanning operation is performed in two different ways over the data store to provide results in response to the one or more queries specified by the user. First way is full scanning and the second way is filter based scanning. Fig. 1 shows exemplary block diagram illustrating method of performing full scanning of the existing technology. The exemplary block diagram includes a search engine which receives one or more queries from the user and executes received one or more queries on the data store. The full scanning includes accessing all the data blocks (data block 1, data block 2,...., data block n) and read every record from the data blocks for each of the one or more queries (query 1, query 2,..., query n) that consume quite a lot of time to retrieve the exact result relating to the one or more user's queries.

Fig. 2 shows another exemplary block diagram illustrating method of performing filter based scanning. The one or more queries include one or more filter value or dimensions or index value specified by the user. For example, query 1 is specified as:
Select {[Student]} ON COLUMNS where ([years].Student in {2003})

The filter value of query 1 is "2003" that is query 1 request to fetch the records of student from year 2003. Similarly as illustrated in fig. 2, query 2 has filter value "2003, 2006" that is to fetch student from year 2003, 2004... 2006. Query 3 has null filter value and query n has filter value of 90 that is to fetch student with marks 90. The filter based scanning involves scanning the data store based on one or more filter values or dimensions or index values specified by the user in the one or more queries. That is, data store is scanned based on the filter value "2003", "2003, 2006", and so on separately for processing query 1, query 2 and so on respectively. Particularly, only required blocks of the data store are scanned based on the filter values. Therefore, records satisfying the filter values of the one or more queries are fetched from the data store.

However, in existing scanning methodologies as discussed above, both ways of the scanning operation involves multiple scans over the data store to retrieve the exact result pertaining to the one or more queries specified by the user since the one or more queries are very complex and ad hoc in nature. That is, the answer of one query immediately sets the need for a second query, and the answer of this second query raises another query, and so on in an ad hoc manner. Thus, efficient query processing is a critical requirement to cope with the usual large amount of data involved and to assure interactive response time with minimum scans over the data store. Also, in the existing methodologies, there is a need for multiple scans even for the one or more concurrent queries that requires same portion of data to be retrieved from the data blocks. For example, if a query 1 requires student for the year 2003 from data block and query 2 also requires student from the year 2003 then existing methodology involves multiple scans over the data store, i.e. the data store is scanned twice separately, on total, to retrieve records of student for the year 2003 for query 1 and query 2 respectively. This means, there are multiple scans performed even if concurrent queries requires same portion of data from the data store which is time consuming and complex. Another example, considering query 1 requires student of the year 2003 and query 2 requires student 2006. Existing methodology performs multiple scans for query 1 and query 2 respectively even though filter values of query 1 (with 2003) and query 2 (with 2006) are of same kind i.e. both describes filter values of kind "year". Performing multiple scan increases query latency because of constraints of resource in the data store.

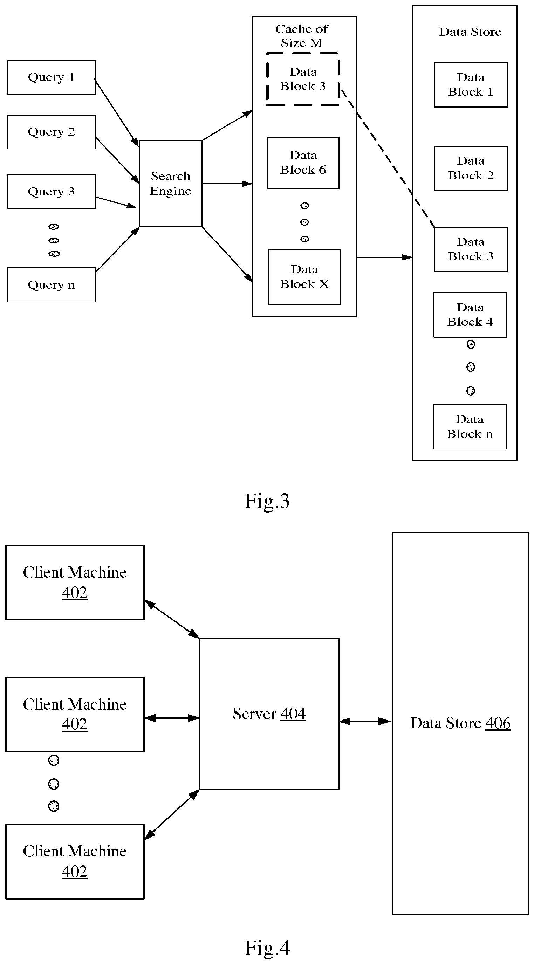

Conventionally, a method to reduce multiple scans is carried out. In particular, caching techniques are introduced to avoid fetching same data block multiple times for processing one or more queries requiring same portion of data. Fig. 3 illustrates the caching technique to reduce multiple scans over the data store. The data blocks having priorities as compared to other data blocks are cached. Therefore, the one or more queries are processed using the data blocks present in the cache to reduce multiple scans over entire data store and thus reduce time as well. However, cache based scanning involves refreshing of cache frequently since the parallel incoming queries require different multiple data blocks to be referred. This in turn involves the current query to wait till the previous query freed the data blocks held in the cache because all the data blocks are held by the previous query which is in the process of scanning.

WO 02/067146 A2 discusses a method of resolving a plurality of database queries. The method includes accumulating a plurality of queries, determining overlapping portions of the queries that relate to one or more common data attributes, resolving at least two of the determined overlapping portions of the queries together, and preparing responses to the queries based on the resolution of the at least two overlapping portions.

US 2009/0216718 A1 discusses a system of query scheduling to maximize work sharing. The system schedules queries to account for future queries possessing a sharability component. Included in the system are operations for assigning an incoming query to a query queue based on a sharability characteristic of the incoming query, and evaluating a priority function for each member of a plurality of query queues to identify one highest priority query queue. The priority function accounts for the probability that a future incoming query will contain the sharability characteristic common to a member of the plurality of query queues. The system of query scheduling to maximize work sharing selects a batch of queries from the highest priority query queue, and dispatches the batch to one or more query execution units.

M. Zukowski "Cooperative Scans", Chapter 7 of the PhD thesis "Balancing vectorised query execution with bandwidth-optimized storage", University of Amsterdam, http://dare.uva.nl/document/2/68051 analyses the performance of different database scan strategiesand identifies three basic approaches. In the first approach called normal a traditional LRU buffering policy is employed wherein in the second and third approach called attach and elevator, respectively, incoming queries can join an ongoing scan in case there is overlap in data need, with the main difference that elevator employs a single, strictly sequential scan cursor, while attach allows for multiple (shared) cursors).

Georgios Giannikis et al "SharedDB: Killing on Thousand QueriesWith One Stone", https://web.archive.Org/web/20130820123545/http://vldb.org/pvldb/vol5/p526_georgiosgiannikis_v ldb2012.pdf describes the design of a new database architecture that is based on batching queries and shared computation across possibly hundreds of concurrent queries and updates.

Hence, there exists a need to reduce multiple scans over the data store for processing the one or more queries and sub queries requiring same portion of data and thus increase or optimize the execution of queries on the data store.

### SUMMARY

The invention is defined by the claims. Additional features and advantages are realized through the techniques of the present disclosure. Other embodiments and aspects of the disclosure are described in detail herein.

The present disclosure relates to a method of optimizing queries execution on a data store. The method comprises receiving, by a receiving module, a plurality of queries including one or more metadata from one or more client machines, wherein the receiving module is configured in a server which is communicatively connected to the data store. Then, a grouping module groups one or more queries of the plurality of queries received from the receiving module into one or more grouping list based on the one or more metadata included in each of the plurality of queries. Later, an execution module executes each of the one or more grouping list comprising the one or more queries of the plurality of queries on the data store to retrieve results in response to the one or more queries of the plurality of queries grouped in the one or more grouping list, said executing each of the one or more grouping list comprises scanning once on the data store for the one or more queries grouped in each of the one or more grouping list.

A server for optimizing queries execution on a data store is also disclosed. The server is being communicatively connected to the data store and comprises a receiving module, a grouping module and an execution module. The receiving module receives a plurality of queries including one or more metadata from one or more client machines. The grouping module groups one or more queries of the plurality of queries received from the receiving module into one or more grouping list based on the one or more metadata included in each of the plurality of queries. The execution module executes each of the one or more grouping list comprising the one or more queries of the plurality of queries on the data store to retrieve results in response to the one or more queries of the plurality of queries grouped in the one or more grouping list, said executing each of the one or more grouping list comprises scanning once on the data store for the one or more queries grouped in each of the one or more grouping list.

The present disclosure is related to a non-transitory computer readable medium including operations stored thereon that when processed by at least one processing unit cause a system to perform the acts of receiving, by a receiving module, a plurality of queries including one or more metadata from one or more client machines, wherein the receiving module is configured in a server which is communicatively connected to the data store. Then, grouping, by a grouping module, one or more queries of the plurality of queries received from the receiving module into one or more grouping list based on the one or more metadata included in each of the plurality of queries. Later, executing, by an execution module, each of the one or more grouping list comprising the one or more queries of the plurality of queries on the data store to retrieve results in response to the one or more queries of the plurality of queries grouped in the one or more grouping list, said executing each of the one or more grouping list comprising the one or more queries of the plurality of queries comprises scanning once on the data store for the one or more queries grouped in each of the one or more grouping list.

A computer program for optimizing queries execution on a data store is also disclosed. The computer program comprising code segment for receiving a plurality of queries including one or more metadata from one or more client machines by a receiving module; code segment for grouping one or more queries of the plurality of queries received from the receiving module by a grouping module into one or more grouping list based on the one or more metadata included in each of the plurality of queries, and code segment for executing each of the one or more grouping list comprising the one or more queries of the plurality of queries on the data store by an execution module to retrieve query results in response to the one or more queries of the plurality of queries grouped in the one or more grouping list, said executing each of the one or more grouping list comprises scanning once on the data store for the one or more queries grouped in each of the one or more grouping list.

The foregoing summary is illustrative only and is not intended to be in any way limiting. In addition to the illustrative aspects and features described above, further aspects, and features will become apparent by reference to the drawings and the following detailed description.

### BRIEF DESCRIPTION OF DRAWINGS

The novel features and characteristic of the disclosure are set forth in the appended claims. The embodiments of the disclosure itself, however, as well as a preferred mode of use, further objectives and advantages thereof, will best be understood by reference to the following detailed description when read in conjunction with the accompanying drawings.
Fig. 1 shows exemplary block diagram illustrating method of performing full scanning in accordance with an embodiment of the prior art;
Fig. 2 shows exemplary block diagram illustrating method of performing filter based scanning in accordance with an embodiment of the prior art;
Fig. 3 shows exemplary block diagram illustrating the caching technique to reduce multiple scans over the data store in accordance with an embodiment of the prior art;
Fig. 4 illustrates an exemplary high level server block diagram in accordance with an embodiment of the present disclosure;
Fig. 5 illustrates an exemplary high level server block diagram adopted for optimizing query execution on a data store in accordance with an embodiment of the present disclosure; and
Fig. 6 illustrates an exemplary block diagram showing queuing of one or more queries by a receiving module in accordance with an embodiment of the present disclosure;
Fig. 7 is an exemplary diagram illustrating grouping of one or more queries by a grouping module in accordance with an embodiment of the present disclosure;
Fig. 8 shows an exemplary block diagram of an execution module illustrating execution of one or more queries on a data store by an execution module in accordance with an embodiment of the present disclosure;
Fig. 9 shows an exemplary flow chart illustrating method of optimizing query execution on a data store in accordance with an embodiment of the present disclosure;
Fig. 10 shows an exemplary flowchart illustrating scanning on a data store for one or more queries which are grouped together by a grouping module in accordance with an embodiment of the present disclosure;
Figs. 11 shows an exemplary diagram illustrating queuing and grouping of one or more queries in accordance with an embodiment of the present disclosure; and
Fig. 12 shows an exemplary diagram illustrating scanning on a data store for one or more queries grouped together in accordance with an embodiment of the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

### DESCRIPTION OF EMBODIMENTS

The foregoing has broadly outlined the features and technical advantages of the present disclosure in order that the detailed description of the disclosure that follows may be better understood. Additional features and advantages of the disclosure will be described hereinafter which form the subject of the claims of the disclosure. It should be appreciated by those skilled in the art that the conception and specific aspect disclosed may be readily utilized as a basis for modifying or designing other structures for carrying out the same purposes of the present disclosure. The novel features which are believed to be characteristic of the disclosure, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

Embodiment of the present disclosure relates to intelligent querying of Big Data store. In particular, the present disclosure relates to a method and a server to optimize query execution on a data store. The query execution in the present disclosure is optimized by grouping one or more queries, requiring same portion of data from the data store, into one or more groups. Also, grouping of the one or more queries into the one or more groups is achieved from one or more metadata included in the one or more queries specified by a user who wishes to retrieve the results based on the one or more metadata. In an embodiment, grouping of the one or more queries that belongs to a same schema are grouped together. The one or more queries grouped under the one or more groups are executed that involves scanning of the data store only for once. More particularly, the data store for each group is scanned only for once since each group contains the one or more queries that require similar kind of data avoiding multiple scans over the data store for retrieving same portion of data. Therefore, in this way, the number of scanning for the one or more queries requiring same portion of data is reduced. Scanning for each group only for once involves determining a scan range which is the range of scanning the data store to retrieve results corresponding to each of the one or more queries grouped in the particular group. The scan range is determined based on the one or more metadata included in the one or more queries grouped in one particular group. Then, the results pertaining to the one or more queries, grouped in the particular group which is under scanning, is retrieved. The retrieved results are segregated as per the requirement and in response to the one or more queries based on the one or more metadata included in the one or more queries. In such way, each query is returned with required results from the data store with minimum latency.

Henceforth, embodiments of the present disclosure are explained with the help of exemplary diagrams and one or more examples. However, such exemplary diagrams and examples are provided for the illustration purpose for better understanding of the present disclosure and should not be construed as limitation on scope of the present disclosure.

Fig. 4 illustrates an exemplary high level server block diagram in accordance with an embodiment of the present disclosure. The server performs optimization of queries execution on a data store. The server 404 is communicatively connected to one or more client machines 402 and a data store 406. The one or more client machines 402 are associated to one or more users using which the one or more user can posts queries and retrieve results from the data store 406 which are processed by the server 404. The one or more client machines 402 include, but are not limited to, a mobile device, contactless device, computer, Personal Digital Assistants (PDA), and any other communication devices capable of receiving input from the users, performing data transmission and displaying. In embodiment, the one or more users use the one or more client machines 402 for accessing the data store 406 which stores various big data information.

The information stored in big data store may be related to one or more establishments, including, but are not limited to, financial institutions, stocks, commercial establishments, government offices, data security centers, social networks, educational institutions, weather forecast centers and manufacturing industries. For example, data store 406 stores information relating to students, teachers, lecturers, subjects, marks, academic details etc. which falls under educational institutions. In an exemplary embodiment, information of one or more establishments are stored in the data store 406 in predefined format or structures or extensions, such as but are not limiting to , a flat file, a hierarchical on-line analytical processing data cube, a multidimensional cubes, a relational data store, an on-line analytical processing (OLAP) data cube and an Excel file. A person skilled in the art should understand that there can be any number of data stores that stores big data information. In an embodiment, the server 404 are connected to the one or more client machine 402 and the data store 406 over a communication network (not shown in Fig.1) to comply with processing queries and optimize the query execution on the data store 406.

The communication network includes, are not limited to, an e-commerce network, a peer to peer (P2P) network, Local Area Network (LAN), Wide Area Network (WAN) and any wireless network such as Internet and WIFI etc. The communication network enables the one or more users (using the one or more client machines 402) to communicate with the data store 406 through the server 406 for retrieving the required information. For example, the one or more users generate queries, using the one or more client machines 402, which are received by the server 404. Then, the server 404 communicates with the data store 406 to retrieve results in response to the queries received from the one or more client machines 402. The results are retrieved from the data store 406 by the server 404 and are returned to the one or more client machines 402, thus, completing query execution over the communication network.

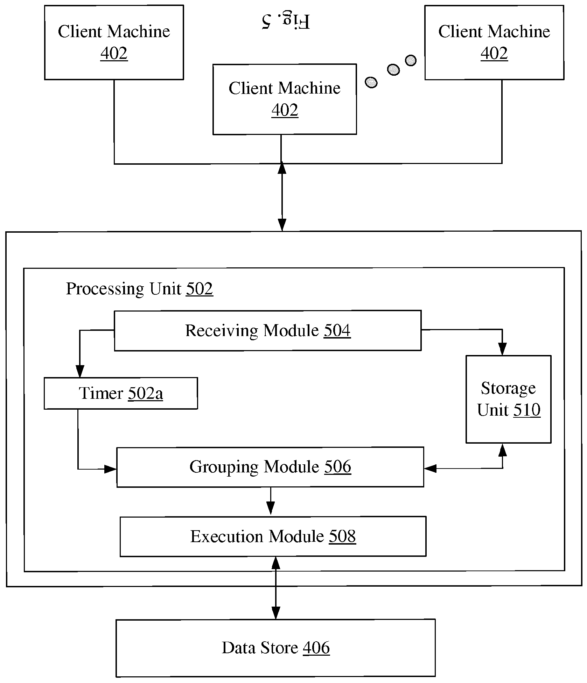

Fig. 5 illustrates an exemplary high level server block diagram adopted for optimizing query execution on a data store 406 in accordance with an embodiment of the present disclosure. The server 404 comprises a processing unit 502. The processing unit 502 configured in the server 406 comprises a receiving module 504, a grouping module 506, an execution module 508 and a storage unit 510. The receiving module 504 configured in the processing unit 502 receives a plurality of queries including one or more metadata from the one or more client machines 402. The plurality of queries including the one or more metadata is specified by the one or more users. The plurality of queries is generated using a query language including, but are not limited to, a Multidimensional Expressions (MDX) language and a Structured Query Language (SQL). The one or more metadata included in each of the plurality of queries are filter dimensions, filter members, and data sets such as, for example, filter values or index value or constraint values and members of the queries.

After receiving the plurality of queries from the one or more client machines 402, the grouping module 506 performs grouping of one or more queries of the plurality of queries into one or more grouping list. Grouping of the one or more queries of the plurality of queries is based on the one or more metadata included in each of the plurality of queries. The one or more grouping list comprising the one or more queries of the plurality of queries are executed on the data store 406 by the execution module 508. In an embodiment, execution of each of the one or more grouping list comprises scanning on the data store 406 for only once for the one or more queries grouped in each of the one or more grouping list. More particularly, the data store 406 is scanned only for once for each grouping list. Then, the results in response to the one or more queries of the plurality of queries grouped in the one or more grouping list are retrieved by the execution module 508 which are in turn provided to the one or more client machines 402.

The storage unit 510 is configured to store the plurality of queries received by the receiving module 504 and the one or more grouping list comprising the one or more queries of the plurality of queries, which is generated by the grouping module 506. In an embodiment, the storage unit 510 stores the big data information imported from the data stores 406. In an embodiment, the receiving module 504 performs queuing of the plurality of queries into a queue which is stored in the storage unit 510. The storage unit 510 includes, but not limited to, a computer readable media having executable instructions. Such computer readable media can be any available media which can be accessed by one or more client machines 402 including general purpose or special purpose computer. By way of example, and not limitation, such computer readable media can comprise RAM, ROM, EEPROM, CD-ROM or other optical disk storage, magnetic disk storage or other magnetic storage devices, or network attached storage, or any other medium which can be used to store the desired executable instructions and which can be accessed by a general purpose or special purpose computer. Combinations of the above should also be included within the scope of computer readable media. Executable instructions comprise, for example, instructions and data which cause a general purpose computer, special purpose computer, or special purpose processing device to perform a certain function or group of functions.

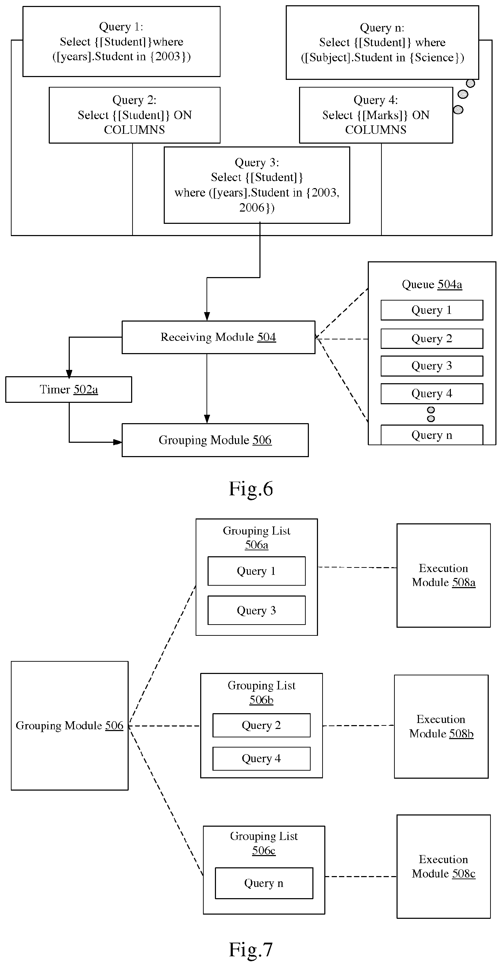

Fig. 6 illustrates an exemplary block diagram showing queuing of one or more queries by a receiving module 504 in accordance with an embodiment of the present disclosure. The receiving module 504 receives the plurality of queries including the one or more metadata from the one or more client machines 402. For example, in Fig. 6, n number of queries (query 1, query 2,...., query n) are illustrated which are received by the receiving module 504. Each query in n number of queries may or may not comprises one or more metadata, for example, query 1 specifies to retrieve results on student from the year 2003. Here, year 2003 is the metadata which are the filter dimension, filter members and data sets of the query 1 mentioned in "where" clause that restricts to retrieve results on student only from year 2003. Similarly, query 2 specifies to retrieve results on student with Null metadata; hence, all the results relating to student are retrieved since the query 2 has no constraints specified. Query 3 specifies to retrieve results on student for years 2003, 2004,...., 2006 mentioned in the "where" clause. Query 4 is similar to query 2 with Null metadata, where it specifies to retrieve marks of all the student. Query n specifies to retrieve results on science subject of the student.

The plurality of queries (query 1, query 2,...., query n) queued into a queue 504a by the receiving module 504. In the illustrated Fig. 6, the plurality of queries (query 1, query 2,....., query n) are queued into the queue 504a. In an embodiment, the receiving module 504 is a parser alternatively referred as language parser which queues the plurality of queries into the queue 504a. After queuing, one or more queries of the plurality of queries queued into the queue 504a are grouped into the one or more grouping list by the grouping module 506. In an embodiment, a timer 502a is coupled with the receiving module 504. The timer 502a is initiated when at least one of the received one or more queries are queued by the receiving module 504. For example, assuming query 1 is queued in the queue 504a, the timer is initiated as and when the query 1 is queued and the time of 30 milliseconds is set as a waiting period. After elapse of the predefined waiting period, the grouping module 506 starts grouping the one or more queries of the plurality of queries into the one or more grouping list. For example, assuming within set time of 30 milliseconds four queries are queued in the queue 504a, then upon elapse of 30 milliseconds, the grouping module 506 starts grouping the four queries that belongs to same schema based on their metadata. In an embodiment, grouping of the one or more queries of the plurality of queries upon elapse of the predefined waiting period configured in the timer is optional. The predefined wait period is set during system configuration and is capable of being modified as per the user requirement.

Fig. 7 is an exemplary diagram illustrating grouping of one or more queries by a grouping module 506 in accordance with an embodiment of the present disclosure. The grouping module 506 groups the one or more queries that are queued into the queue 504a based on the one or more metadata included in each of the plurality of queries. In an embodiment, grouping of the one or more queries that belongs to a same schema are grouped together. In an embodiment, the one or more queries of the plurality of queries are grouped into the one or more grouping list based on similarity between the one or more metadata included in each of the plurality of queries. For example, in the illustrated Fig. 7, query 1 and query 3 are grouped into one grouping list 506a since the one or more metadata are similar, i.e. metadata of query 1 defines year "2003" and metadata of query 3 defines for years "2003, 2004, .....,2006". Query 1 and query 3 are grouped together in one grouping list since they define the same kind of metadata even though the range of query 1 is different from query 3. Similarly, query 2 defining Null metadata and query 4 defining Null metadata are grouped together into single grouping list 506b because of their similar kind of metadata even though the entity for which the result is to be fetched are different from one another. That is, query 2 defines entity as "student" and query 4 defines entity as "marks", but, query 2 and query 4 are grouped into grouping list 506b since they define similar kind of metadata i.e. "Null" metadata in the illustrated example and/or belongs to same schema. Query n, defining results of student having science subject to be retrieved, is grouped into a separate grouping list 506c since metadata of query n is not similar to metadata of any other query in the queue 504a. In an embodiment, one or more sub queries of each of the plurality of queries are grouped into the one or more grouping list by the grouping module. After retrieving results for each of the sub queries grouped in the one or more grouping list, results for the main query is returned. Such way of processing query reduces the latency of processing the one or more queries including the one or more sub queries. Each of the grouping lists (506a, 506b and 506c) are executed by respective execution module 508a, 508b and 508c. Example, grouping list 506a is executed by execution module 508a, grouping list 506b is executed by execution module 508b and grouping list 506c is executed by execution module 508c. In an embodiment, all the grouping lists (506a, 506b and 506c) are executed parallelly by execution module 508a, 508b and 508c respectively. The objective of grouping the one or more queries into the one or more grouping list (506a, 506b and 506c) is to reduce the number of times of executions performed by the execution module 508a, 508b and 508c respectively for the one or more queries requiring same portion of data which are determined from the one or more metadata defined by the one or more queries.

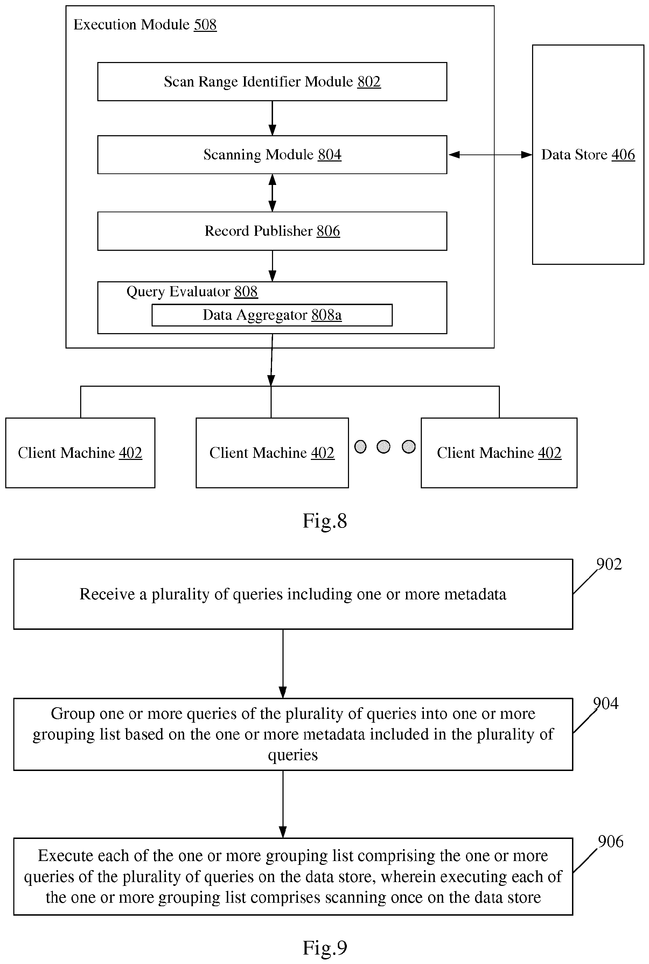

Fig. 8 shows an exemplary block diagram of an execution module 508 illustrating execution of one or more queries on a data store 406 by an execution module in accordance with an embodiment of the present disclosure. The execution module 508 executes each of the one or more grouping list (506a, 506b and 506c) (refer fig.7) comprising the one or more queries of the plurality of queries on the data store 406 to retrieve results in response to the one or more queries of the plurality of queries grouped in the one or more grouping list (506a, 506b and 506c). The execution of each of the one or more grouping list (506a, 506b and 506c) involves scanning the data store 406 only for once for the one or more queries grouped in each of the one or more grouping list (506a, 506b and 506c). Scanning for each of the one or more grouping list (506a, 506b and 506c) is performed only for once since the one or more queries grouped into the particular grouping list requires same portion of data to be fetched. For example, grouping list 506a having query 1 and query 3 defines same portion of data to be fetched from the data store 406. More particularly, scanning the data store 406 separately for query 1 and query 3 respectively is avoided since both the query 1 and query 3 requires same portion of data. Therefore, data store 406 is scanned only for once for the grouping list 506a to retrieve results pertaining to both the query 1 and query 3. The same scanning process is performed for other grouping list (506b and 506c) as well, thus avoiding multiple scans on the data store 406 which reduces latency to retrieve the results for the one or more queries. The execution module 508 comprises a scan range identifier module 802, a scanning module 804, record publisher 806, one or more query evaluator 808 and a data aggregator 808a configured in each of the one or more query evaluator 808 which are involved in performing scanning on the data store 406 for the one or more queries (query 1, query 2,...., query n) grouped in each of the one or more grouping list (506a, 506b and 506c).

The scan range identifier module 802 is configured to determine a scan range including start and end keys of the scan for each of the one or more grouping list (506a, 506b and 506c) based on the one or more metadata included in the one or more queries grouped in each of the one or more grouping list (506a, 506b and 506c). For example, considering the grouping list 506a having query 1 and query 3. The scan range between the query 1 and query 3 is determined to perform scanning on the data store 406. The scan range typically defines the range for how much the data store 406 i.e. data blocks in the data store 406 is to be scanned for the queries such as query 1 and query 3 grouped in the grouping list 506a. For example, query 1 defines metadata as year "2003" and query defines metadata as for years 2003, 2004,...,2006. Therefore, in this case the scan range of grouping list 506a is for years 2003, 2004,....,2006.

The scanning module 804 is configured to read the data store 406 based on the determined scan range to retrieve records. That is, for example, the scanning module 804 reads the data store 406 having records of student for years 2003, 2004,...,2006 and accordingly the results pertaining to query 1 and query 3 respectively are retrieved. Next, scanning module 804 forwards the retrieved records to the record publisher 806 when the retrieved records are falling within the determined scan range. For example, the scan range determined for query 1 and query 3 grouped in the grouping list 506a is for years 2003, 2004,...,2006. Therefore, the records of student for years 2003, 2004,...., 2006 are retrieved from the data store 406 and forwarded to the record publisher 806. In an embodiment, record publisher 806 intimates the scanning module 804 to send next records i.e. up to end keys after the record corresponding to the start key is received. For example, start key is year 2003 and end key is year 2006 and records for years 2003, 2004,...., 2006 are assumed to be fetched. When the scanning module retrieves and forwards records of student of year 2003 to comply with query 1, then record publisher 806 intimates the scanning module 804 to forward the records relating to the year 2004. Similarly, when records of year 2004 are retrieved, record publisher 806 intimates to send the records of year 2005 and so on up to year 2006.

The query evaluator 808 receives the retrieved records from the record publisher 806. In an embodiment, number of query evaluators 808 corresponds to the plurality of queries received by the receiving module 504. For example, when query 1 is received by the receiving module 504, query evaluator 1 is generated for the received query 1. The query evaluator 808 validates whether the retrieved records matches with the one or more metadata included in each of the one or more queries of the plurality of queries which are received by the receiving module 504. For example, query 1 is complied with records containing student for the year 2003 and query 3 are complied with the records containing student for years 2003, 2004,..., 2006 respectively by the query evaluator 808. The retrieved records received by the query evaluator 808 are aggregated by the data aggregator 808a of the query evaluator 808 upon validating the retrieved records. Hence, the aggregated records are transmitted as a query result corresponding to each of the one or more queries of the plurality of queries to the one or more client machines 402 by the query evaluator 808. In an embodiment, the one or more grouping list (506a, 506b and 506c) comprising the one or more queries of the plurality of queries are executed parallelly on the data store 406. For example, grouping list 506a, grouping list 506b and grouping list 506c are parallelly executed for reducing execution time.

Fig. 9 shows an exemplary flow chart illustrating method of optimizing query execution on a data store 406 in accordance with an embodiment of the present disclosure. At step 902, the receiving module 504 receives the plurality of queries (query 1, query 2,..., query n) including one or more metadata from the one or more client machines 402. At step 904, the grouping module 506 groups the one or more queries of the plurality of queries that are received from the receiving module 504 into one or more grouping list (506a, 506b and 506c) based on the one or more metadata included in each of the plurality of queries. At step 906, the execution module 508 executes each of the one or more grouping list (506a, 506b and 506c) to retrieve results in response to the one or more queries of the plurality of queries grouped in the one or more grouping list (506a, 506b and 506c). In an embodiment, execution of each of the one or more grouping list (506a, 506b and 506c) comprises scanning the data store 406 for only once for the one or more queries grouped in each of the one or more grouping list (506a, 506b and 506c).

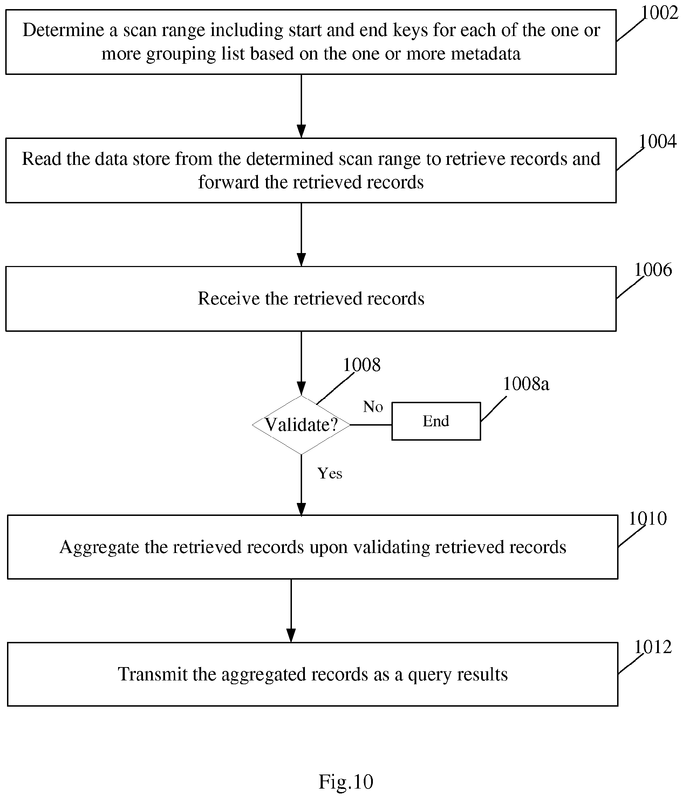

Fig. 10 shows an exemplary flowchart illustrating scanning on the data store 406 for one or more queries which are grouped together by the grouping module 506 in accordance with an embodiment of the present disclosure. At step 1002, the scan range identifier module 802 configured in the execution module 508 determines the scan range which includes start and end keys of the scan for each of the one or more grouping list (506a, 506b and 506c). Determination of the scan range is based on the one or more metadata included in the one or more queries grouped in each of the one or more grouping list (506a, 506b and 506c). At step 1004, the scanning module 804 reads the data store 406 from the determined scan range to retrieve records and forwarding the retrieved records to the record publisher 806 when the retrieved records are within the determined scan range. In an embodiment, when the retrieved records are out of the determined scan range, the record publisher 806 indicates all the query evaluators 808 corresponding to each of the one or more queries of plurality of queries received by the receiving module 504 to provide the results to the one or more client machines 402. In an embodiment, record publisher 806 intimates the scanning module 804 to send next records i.e. up to end keys after the record corresponding to the start key is received. Also, in an embodiment the record publisher 806 indicates the scanning module 804 about the next ideal key to scan for. More precisely, the record publisher 806 provides hint to the scanning module 804 for the next record to be read based on the metadata included in the one or more queries present in the grouping list 506 . For example, assuming scanning for query 1 having 2003 as filter value is finished. And now for query 2 having the filter value 2003, 2004,..., 2006 is to be scanned. Then, after finishing publishing of the records for query 1, the record publisher 806 indicates records 2004 to be scanned by the scanning module 804. At step 1006, query evaluator 808 corresponding to each of the one or more queries of plurality of queries received by the receiving module 504, receives the retrieved records from the record publisher 806. At step 1008, the query evaluator 808 validates whether the retrieved records matches with the one or more metadata included in each of the one or more queries of the plurality of queries which are received by the receiving module 504.. The retrieved records received by the query evaluator 808 (at step 1006) are aggregated by the data aggregator 808a of the query evaluator 808 upon validating the retrieved records (performed at step 1008) as illustrated at step 1010. Hence, the aggregated records are transmitted as a query result corresponding to each of the one or more queries of the plurality of queries to the one or more client machines 402 by the query evaluator 808 at step 1012.

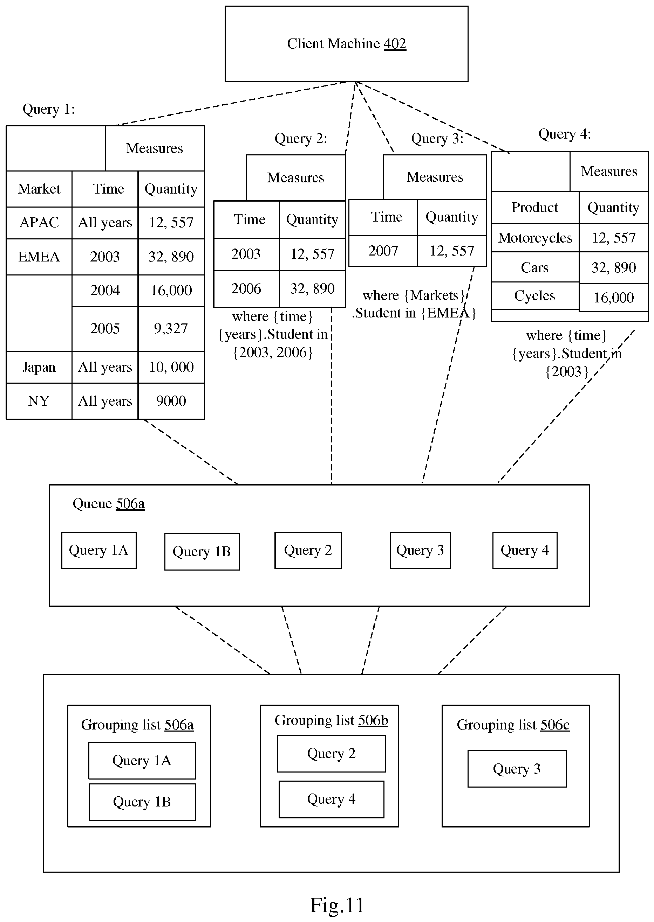

Figs. 11 show an exemplary diagram illustrating queuing and grouping of one or more queries in accordance with an embodiment of the present disclosure. In the example, only single client machine 402 is illustrated, however, a person skilled in the art should understand that any number of client machines 402 can be used by the user. The user posts four queries i.e. query 1, query 2, query 3 and query 4. Query 1 is divided into two sub queries namely Query 1A and Query 1B. Query 1A is sub query of Query 1 specifying records to be fetched from Market in turn from particular Territory and Query 1B is sub query of Query 1 specifying records to be fetched of particular Time and Year for the territory EMEA. More particularly, Query 1 specifies its requirement in form of MDX as given below:
Query 1A:
   Select NON EMPTY {[Measures] . [Quantity]} ON COLUMNS,
   [Market]. [Territory] ON ROWS
Query 1A requires records involved in market field from particular territory. Here, the filter dimension or filter value i.e. metadata is NULL.
Query 1B:
   Select NON EMPTY {[Measures] . [Quantity]} ON COLUMNS,
   [Time]. [Year] ON ROWS
   Where [Market]. [Territory]. in {EMEA}
Query 1B requires records particular time and year for the territory EMEA. Here, the filter dimension or filter value i.e. metadata is Market.
Similarly, Query 2 specifies its requirement as:
   Query 2:
   Select NON EMPTY {[Measures] . [Quantity]} ON COLUMNS,
   [Time]. [All Years]. Student, ON ROWS
   From [Market]
   where [Time].[Years].Student in {2003, 2006}
Query 2 requires records of student involved in market field for years 2003, 2004,..., 2006. Here, the filter value is for years 2003, 2004,..., 2006.
Query 3 specifies its requirement as:
   Query 3:
   Select NON EMPTY {[Measures] . [Quantity]} ON COLUMNS,
   [Time]. [All Years]. Student, ON ROWS
   From [Market]
   where [Markets]. Student in {EMEA}
Query 3 requires records of student involved in market field of EMEA. Here, the filter value is EMEA. And
Query 4 specifies its requirement as:
   Query 4:
   Select NON EMPTY {[Measures] . [Quantity]} ON COLUMNS,
   [Time]. [All Years]. Student, ON ROWS
   From [Market]
   where [Time].[Years].Student in {2003}
Query 4 requires records of student involved in market field of year 2003. Here, the filter value is year 2003.

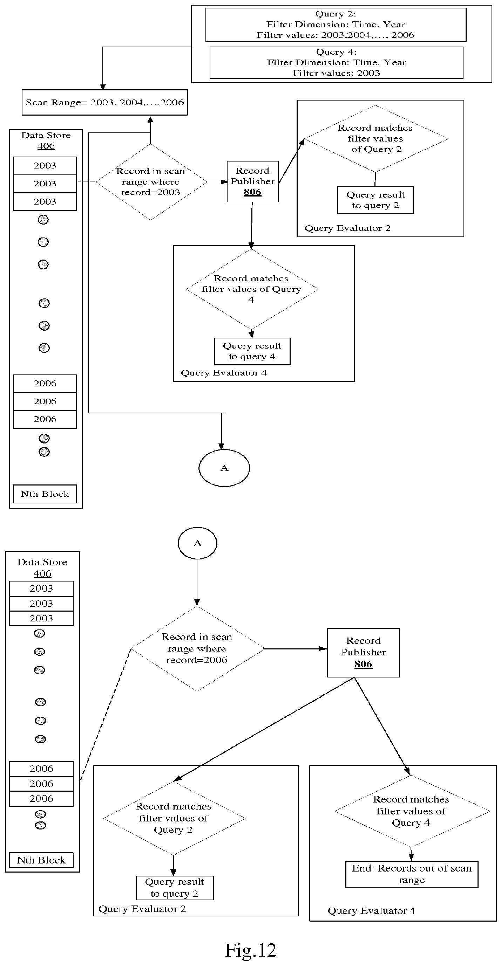

The above four queries are queued into the queue 504a by the receiving module 504. Assuming the timer 502a is set for 30 milliseconds and all the above four queries (query 1 to query 4) which are received by the receiving module 504 are queued in the queue 504a. Then, upon elapse of 30 milliseconds, all four queries are processed by the grouping module 506 for grouping into the one or more grouping list based on their filter value. Query 1A and Query 1B are put into same grouping list 506a since they are sub queries of Query 1. In an embodiment, result for the main query 1 cannot be published until the sub queries are processed and does not seem to be similar to any other queries in the queue 504a. In an embodiment, result for Query 1A and Query 1B together provide result to entire Query 1. Query 2 and Query 4 have similar kind of filter values. Therefore, Query 2 and Query 4 are grouped together in one grouping list 506b. And Query 3 defines filter value as EMEA which is not similar to any of Query 1, Query 2 or Query 4. Therefore, Query 3 is grouped into separate grouping list 506c. Execution of grouped list is explained in detail in fig. 12.

Fig. 12 shows an exemplary diagram illustrating scanning on the data store 406 for one or more queries grouped together in accordance with an embodiment of the present disclosure. Specifically, execution of Query 2 and Query 4 which are grouped in grouping list 506b as illustrated in Fig. 11 is explained. Executing the Query 2 and Query 4 grouped in grouping list 506b involves scanning over the data store 406. The data store 406 comprises N number of blocks containing student related information. Scanning of Query 2 and Query 4 involves determining scan range. Therefore, from the filter values of Query 2 and Query 4 scan range is determined to be for years 2003, 2004,..., 2006 by the scan range identifier module 802. Now, the scanning module 804 reads through the data store 406 and retrieves the records for Query 2 and Query 4 for years 2003, 2004,...., 2006 since the scan range defined is for years 2003, 2004,...,-2006. Before forwarding the records to record publisher 806, scanning module 804 checks whether the retrieved records is in the scan range of for years 2003, 2004,...,-2006.The retrieved records are forwarded to the record publisher 806. Scanning module 804 forwards the records of year 2003 to record publisher 806 since the read and retrieved records of year 2003 fall within the scan range of for years 2003, 2004,..., 2006. When the retrieved records are out of the determined scan range, the record publisher 806 indicates all the query evaluators 808 corresponding to each of the one or more queries of plurality of queries received by the receiving module 504 to provide the results to the one or more client machines 402. Now, query evaluator 808 corresponding to the Query 2 and Query 4 respectively, receives the retrieved records from the record publisher 806. In an embodiment, when Query 1, Query 2,...,Query 4 are received by the receiving module 504, each query is configured with respectively query evaluators. For example, here, Query 2 and Query 4 have configured with query evaluator 2 and query 4. The query evaluator 808 validates whether the retrieved records of year 2003 matches with the filter value of Query 2 and Query 4 respectively to comply with a response to Query 2 and Query 4. Query results of year 2003 is aggregated by the data aggregator 808a of the query evaluator 808 corresponding to Query 2 and Query 4 respectively when the retrieved records matches with the filter values "2003" of Query 2 (having filter value as year 2003) and Query 4 (having filter values as for years 2003, 2004,...,-2006) respectively.. Same way, the records for year 2004 up to year 2006 is retrieved, matched and are aggregated to provide as a query results as per the filter values of Query 2 and Query 4. In case, the records published by the record publisher 806 does not fetch the records matching corresponding to its one or more metadata or provides more records which are out of one or more metadata, then query evaluator 808 provides the aggregated results from the records whichever are been matched with its one or more metadata, as published by the record publisher 806. For example, the records of year 2006 do not fall under the scan range = for years 2003, 2004,..., 2006when scanning for Query 4 is processed. Therefore, the query evaluator for Query 4 publishes the results based on the records fetched for the year 2003 as published by the record publisher 806.

The described operations are implemented as a method, system or article of manufacture using standard programming and/or engineering techniques to produce software, firmware, hardware, or any combination thereof. The described operations are implemented as code maintained in a "non-transitory computer readable medium", where a processing unit read and execute the code from the computer readable medium. The processing unit is at least one of a microprocessor and a processor capable of processing and executing the queries. A non-transitory computer readable medium comprise media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. We suggest further stating in the specification that non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.). Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the invention, and that the article of manufacture may comprise suitable information bearing medium known in the art.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

Devices that are in communication with each other need not be in continuous communication with each other, unless expressly specified otherwise. In addition, devices that are in communication with each other may communicate directly or indirectly through one or more intermediaries.

A description of an embodiment with several components in communication with each other does not imply that all such components are required. On the contrary a variety of optional components are described to illustrate the wide variety of possible embodiments of the invention.

Further, although process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of FIG. 9 and FIG10 show certain events occurring in a certain order. In alternative examples not covered by the claimed invention, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

The foregoing description of various embodiments of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto. The above specification, examples and data provide a complete description of the manufacture and use of the composition of the invention. Since many embodiments of the invention can be made without departing from the scope of the invention, the invention resides in the claims hereinafter appended.

Additionally, advantages of present disclosure are illustrated herein.

Embodiment of the present disclosure reduces multiple scans to be performs for the one or more queries requiring same portion of data to be fetched from the data store 406.

Embodiment of the present disclosure reduces the latency for processing and executing the one or more queries on the data store 406 by grouping the one or more queries together that requires same portion data.

Embodiment of the present disclosure performs execution of the one or more queries grouped under the one or more grouping list on the data store 406 parallelly or concurrent which reduces processing time. More particularly, the one or more grouping list comprising the one or more queries are executed parallelly or concurrently on the data store 406.

Embodiment of the present disclosure performs scanning on the data store for each grouping list for only once. Thus, multiple scans are avoided for the one or more queries that require same portion of data to be fetched.

Finally, the language used in the specification has been principally selected for readability and instructional purposes, and it may not have been selected to delineate or circumscribe the inventive subject matter. It is therefore intended that the scope of the invention be limited not by this detailed description, but rather by the appended claims. Accordingly, the disclosure of the embodiments of the present disclosure is intended to be illustrative, but not limiting, of the scope of the invention, which is set forth in the following claims.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

In addition, where features or aspects of the disclosure are described in terms of Markush groups, those skilled in the art will recognize that the disclosure is also thereby described in terms of any individual member or subgroup of members of the Markush group.

## Claims

1. A method of optimizing queries execution on a data store (406), the method comprising:
receiving (902), by a receiving module (504), a plurality of queries including one or more metadata from one or more client machines (402), wherein the receiving module (504) is configured in a server (404) which is communicatively connected to the data store (406);
grouping (904), by a grouping module (506), one or more queries of the plurality of queries received by the receiving module (504) into one or more grouping list based on the one or more metadata included in each of the plurality of queries; and
executing (906), by an execution module (508), each of the one or more grouping list comprising the one or more queries of the plurality of queries on the data store to retrieve results in response to the one or more queries of the plurality of queries grouped in the one or more grouping list, said executing (906) each of the one or more grouping list comprises scanning only for once on the data store (406) for the one or more queries grouped in each of the one or more grouping list;
**characterized in that**
the scanning only for once on the data store (406) for the one or more queries grouped in each of the one or more grouping list comprises:
determining (1002), by a scan range identifier module (802) configured in the execution module (508), a scan range including start and end keys of the scan for each of the one or more grouping list based on the one or more metadata included in the one or more queries grouped in each of the one or more grouping list;
reading (1004), by a scanning module (804) configured in the execution module (508), the data store (406) from determined scan range to retrieve records and forwarding the retrieved records to record publisher (806) when the retrieved records are within the determined scan range, wherein the record publisher (806) is configured in the execution module (508);
receiving (1006), by a query evaluator (808), the retrieved records from the record publisher (806), said query evaluator (808) validates (1008) whether the retrieved records matches with the one or more metadata included in each of the one or more queries of the plurality of queries, wherein the retrieved records received by the query evaluator (808) are aggregated (1010) by a data aggregator (808a) of the query evaluator (808) upon validating the retrieved records; and
transmitting (1012), by the query evaluator (808), the aggregated records as a query result corresponding to the one or more queries of the plurality of queries received by the receiving module (504).

2. The method as claimed in claim 1, wherein the one or more metadata included in each of the plurality of queries are at least one of filter dimensions, filter members and data sets.

3. The method as claimed in claim 1 or 2, wherein the one or more queries of the plurality of queries belonging to a same schema are grouped into the one or more grouping list.

4. The method as claimed in any one of claims 1 to 3, wherein grouping (904) of the plurality of queries into the one or more grouping list is based on similarity between the one or more metadata included in each of the plurality of queries.

5. The method as claimed in any one of claims 1 to 4, wherein the received plurality of queries is queued by the receiving module (504).

6. The method as claimed in claim 5, wherein grouping (904) of the one or more queries of the plurality of queries into the one or more grouping list is performed upon elapse of a predefined wait period set in a timer (502a), said timer (502a) is initiated when at least one of the received one or more queries are queued.

7. The method as claimed in claim 1, wherein the method further comprising indicating a next ideal key by the record publisher (806) to the scanning module (804), wherein next ideal key indicates next records to be read based on the one or more metadata of the one or more queries grouped in the grouping list.

8. A server (404) for optimizing queries execution on a data store (406), the server (404) comprising:
a receiving module (504), configured to receive a plurality of queries including one or more metadata from one or more client machines (402);
a grouping module (506), configured to group one or more queries of the plurality of queries received from the receiving module (504) into one or more grouping list based on the one or more metadata included in each of the plurality of queries; and
an execution module (508), configured to execute each of the one or more grouping list comprising the one or more queries of the plurality of queries on the data store (406) to retrieve results in response to the one or more queries of the plurality of queries grouped in the one or more grouping list, said executing each of the one or more grouping list comprises scanning only for once on the data store (406) for the one or more queries grouped in each of the one or more grouping list;
**characterized in that**
the execution module (508) comprises:
a scan range identifier module (802) to determine a scan range including start and end keys of the scan for each of the one or more grouping list based on the one or more metadata included in the one or more queries grouped in each of the one or more grouping list;
a scanning module (804) configured to read the data store from determined scan range to retrieve records and forwarding the retrieved records to record publisher (806) when the retrieved records are within the determined scan range, wherein the record publisher (806) is configured in the execution module (508); and
a query evaluator (808) is configured to receive the retrieved records from the record publisher (806), said query evaluator (808) validates whether the retrieved records matches with the one or more metadata included in each of the one or more queries of the plurality of queries, wherein the retrieved records received by the query evaluator (808) are aggregated by a data aggregator (808a) of the query evaluator (808) upon validating the retrieved records and configured to transmitting, by the query evaluator (808), the aggregated records as a query result corresponding to the one or more queries of the plurality of queries received by the receiving module (504).

9. The server (404) as claimed in claim 8, further comprises a storage unit (510) configured to store the plurality of queries received by the receiving module (504) and the one or more grouping list comprising the one or more queries of the plurality of queries.

10. The server (404) as claimed in claim 8 or 9, wherein the receiving module (504) is a parser which queues the plurality of queries.

11. The server (404) as claimed in any one of claims 8 to 10, wherein the grouping module (506) groups the one or more queries of the plurality of queries into the one or more grouping list is performed upon elapse of a predefined wait period set in a timer (502a), said timer (502a) is initiated when at least one of the received one or more queries are queued by the receiving module (504).

12. The server (404) as claimed in any one of claims 8 to 11, wherein the data store (406) is selected from at least one of a flat file, a hierarchical on-line analytical processing data cube, a multidimensional cubes, a relational data store, an on-line analytical processing (OLAP) data store and an Excel file.

13. A non-transitory computer readable medium including operations stored thereon that when processed by at least one processing unit (502) cause a system to perform the method as claimed in any one of claims 1 to 7.

## Patentansprüche

1. Verfahren zum Optimieren der Ausführung von Abfragen in einem Datenspeicher (406), wobei das Verfahren Folgendes umfasst:
Empfangen (902) durch ein Empfangsmodul (504) von mehreren Abfragen, die ein oder mehrere Metadaten enthalten, von einer oder mehreren Client-Maschinen (402), wobei das Empfangsmodul (504) in einem Server (404), der mit dem Datenspeicher (406) kommunikationstechnisch verbunden ist, konfiguriert ist;
Gruppieren (904) durch ein Gruppierungsmodul (506) einer oder mehrerer Abfragen aus den mehreren durch das Empfangsmodul (504) empfangenen Abfragen in eine oder mehrere Gruppierungslisten basierend auf den einen oder den mehreren Metadaten, die in jeder der mehreren Abfragen enthalten sind; und
Ausführen (906) durch ein Ausführungsmodul (508) jeder der einen oder der mehreren Gruppierungslisten, die die eine oder die mehreren Abfragen aus den mehreren Abfragen umfassen, in dem Datenspeicher, um Ergebnisse in Reaktion auf die eine oder die mehreren Abfragen aus den mehreren in der einen oder den mehreren Gruppierungslisten gruppierten Abfragen abzurufen, wobei das Ausführen (906) jeder der einen oder der mehreren Gruppierungslisten ein nur einmaliges Scannen in dem Datenspeicher (406) für die eine oder die mehreren in der einen oder den mehreren Gruppierungslisten gruppierten Abfragen umfasst;
**dadurch gekennzeichnet, dass**
das nur einmalige Scannen in dem Datenspeicher (406) für die eine oder die mehreren in jeder aus der einen oder den mehreren Gruppierungslisten gruppierten Abfragen Folgendes umfasst:
Bestimmen (1002), durch ein in dem Ausführungsmodul (508) konfiguriertes Scan-Bereichsidentifizierungsmodul (802), eines Scan-Bereichs, der Start- und Endschlüssel des Scans enthält, für jede der einen oder der mehreren Gruppierungslisten basierend auf den einen oder den mehreren Metadaten, die in der einen oder den mehreren Abfragen, die in jeder aus der einen oder den mehreren Gruppierungslisten gruppiert sind, enthalten sind;
Lesen (1004) durch ein in dem Ausführungsmodul (508) konfiguriertes Scan-Modul (804) des Datenspeichers (406) aus dem bestimmten Scan-Bereich, um Datensätze abzurufen, und Weiterleiten der abgerufenen Datensätze an den Datensatz-Publisher (806), wenn die abgerufenen Datensätze innerhalb des bestimmten Scan-Bereichs sind, wobei der Datensatz-Publisher (806) in dem Ausführungsmodul (508) konfiguriert ist;
Empfangen (1006) der abgerufenen Datensätze durch einen Abfrageauswerter (808) von dem Datensatz-Publisher (806), wobei der Abfrageauswerter (808) validiert (1008), ob die abgerufenen Datensätze mit den einen oder den mehreren Metadaten, die in jeder der einen oder der mehreren Abfragen aus den mehreren Abfragen enthalten sind, übereinstimmen, wobei die abgerufenen Datensätze, die durch den Abfrageauswerter (808) empfangen werden, durch einen Datenaggregator (808a) des Abfrageauswerters (808) nach dem Validieren der abgerufenen Datensätze aggregiert werden (1010); und
Senden (1012) der aggregierten Datensätze durch den Abfrageauswerter (808) als ein Abfrageergebnis, das der einen oder den mehreren Abfragen aus den mehreren durch das Empfangsmodul (504) empfangenen Abfragen entspricht.

2. Verfahren nach Anspruch 1, wobei die einen oder mehreren Metadaten, die in jeder der mehreren Abfragen enthalten sind, wenigstens eines aus Filterdimensionen, Filterelementen und Datenmengen sind.

3. Verfahren nach Anspruch 1 oder 2, wobei die eine oder die mehreren Abfragen aus den mehreren Abfragen, die zu demselben Schema gehören, in die eine oder die mehreren Gruppierungslisten gruppiert werden.

4. Verfahren nach einem der Ansprüche 1 bis 3, wobei das Gruppieren (904) der mehreren Abfragen in die eine oder die mehreren Gruppierungslisten auf einer Ähnlichkeit zwischen den einen oder den mehreren Metadaten, die in jeder der mehreren Abfragen enthalten sind, basiert.

5. Verfahren nach einem der Ansprüche 1 bis 4, wobei die empfangenen mehreren Abfragen durch das Empfangsmodul (504) in eine Warteschlange eingereiht werden.

6. Verfahren nach Anspruch 5, wobei das Gruppieren (904) der einen oder der mehreren Abfragen aus den mehreren Abfragen in die eine oder die mehreren Gruppierungslisten nach Ablauf einer vordefinierten Wartezeit, die in einem Zeitgeber (502a) eingestellt ist, ausgeführt wird, wobei der Zeitgeber (502a) initiiert wird, wenn wenigstens eine aus den empfangenen einen oder mehreren Abfragen in eine Warteschlange eingereiht wird.

7. Verfahren nach Anspruch 1, wobei das Verfahren ferner das Angeben eines nächsten idealen Schlüssels durch den Datensatz-Publisher (806) für das Scan-Modul (804) umfasst, wobei der nächste ideale Schlüssel die nächsten zu lesenden Datensätze basierend auf den einen oder den mehreren Metadaten der einen oder der mehreren in der Gruppierungsliste gruppierten Abfragen angibt.

8. Server (404) zum Optimieren der Ausführung von Abfragen auf einem Datenspeicher (406), wobei der Server (404) Folgendes umfasst:
ein Empfangsmodul (504), das konfiguriert ist, mehrere Abfragen, die ein oder mehreren Metadaten enthalten, von einer oder mehreren Client-Maschinen (402) zu empfangen;
ein Gruppierungsmodul (506), das konfiguriert ist, eine oder mehrere Abfragen aus den mehreren von dem Empfangsmodul (504) empfangenen Abfragen in eine oder mehrere Gruppierungslisten basierend auf den einen oder den mehreren Metadaten, die in jeder der mehreren Abfragen enthalten sind, zu gruppieren; und
ein Ausführungsmodul (508), das konfiguriert ist, jede aus der einen oder den mehreren Gruppierungslisten, die die eine oder die mehreren Abfragen aus den mehreren Abfragen umfassen, in dem Datenspeicher (406) auszuführen, um Ergebnisse als Reaktion auf die eine oder die mehreren Abfragen aus den mehreren Abfragen, die in der einen oder den mehreren Gruppierungslisten gruppiert sind, abzurufen, wobei das Ausführen jeder der einen oder der mehreren Gruppierungslisten nur einmaliges Scannen in dem Datenspeicher (406) für die eine oder die mehreren Abfragen, die in jeder der einen oder der mehreren Gruppierungslisten gruppiert sind, umfasst;
**dadurch gekennzeichnet, dass**
das Ausführungsmodul (508) Folgendes umfasst:
ein Scan-Bereichsidentifizierungsmodul (802) zum Bestimmen eines Scan-Bereichs, der Start- und Endschlüssel des Scans enthält, für jede aus der einen oder den mehreren Gruppierungslisten basierend auf den einen oder den mehreren Metadaten, die in der einen oder den mehreren Abfragen enthalten sind, die in jeder aus der einen oder den mehreren Gruppierungslisten gruppiert sind;
ein Scan-Modul (804), das konfiguriert ist, den Datenspeicher aus dem bestimmten Scan-Bereich zu lesen, um Datensätze abzurufen, und die abgerufenen Datensätze an den Datensatz-Publisher (806) weiterzuleiten, wenn die abgerufenen Datensätze innerhalb des bestimmten Scan-Bereichs sind, wobei der Datensatz-Publisher (806) in dem Ausführungsmodul (508) konfiguriert ist; und
einen Abfrageauswerter (808), der konfiguriert ist, die abgerufenen Datensätze von dem Datensatz-Publisher (806) zu empfangen, wobei der Abfrageauswerter (808) validiert, ob die abgerufenen Datensätze mit den einen oder den mehreren Metadaten, die in jeder der einen oder der mehreren Abfragen aus den mehreren Abfragen enthalten sind, übereinstimmen, wobei die durch den Abfrageauswerter (808) empfangenen abgerufenen Datensätze durch einen Datenaggregator (808a) des Abfrageauswerters (808) nach der Validierung der abgerufenen Datensätze aggregiert werden, und konfiguriert ist, durch den Abfrageauswerter (808) die aggregierten Datensätze als ein Abfrageergebnis, das der einen oder den mehreren Abfragen aus den mehreren durch das Empfangsmodul (504) empfangenen Abfragen entspricht, zu senden.

9. Server (404) nach Anspruch 8, der ferner eine Speichereinheit (510) umfasst, die konfiguriert ist, die mehreren durch das Empfangsmodul (504) empfangenen Abfragen und die eine oder die mehreren Gruppierungslisten, die die eine oder die mehreren Abfragen aus den mehreren Abfragen umfassen, zu speichern.

10. Server (404) nach Anspruch 8 oder 9, wobei das Empfangsmodul (504) ein Parser ist, der die mehreren Abfragen in eine Warteschlange einreiht.

11. Server (404) nach einem der Ansprüche 8 bis 10, wobei das Gruppierungsmodul (506) die eine oder die mehreren Abfragen aus den mehreren Abfragen in die eine oder die mehreren Gruppierungslisten nach Ablauf einer vordefinierten Wartezeit, die in einem Zeitgeber (502a) eingestellt ist, gruppiert, wobei der Zeitgeber (502a) initiiert wird, wenn wenigstens eine aus den empfangenen einen oder mehreren Abfragen durch das Empfangsmodul (504) in eine Warteschlange eingereiht wird.

12. Server (404) nach einem der Ansprüche 8 bis 11, wobei der Datenspeicher (406) aus wenigstens einem aus einer flachen Datei, einem hierarchischen analytischen Online-Verarbeitungs-Datenwürfel, einem mehrdimensionalen Würfel, einem relationalen Datenspeicher, einem analytischen Online-Verarbeitungs-Datenspeicher (OLAP-Datenspeicher) und einer Excel-Datei ausgewählt ist.

13. Nicht-flüchtiges computerlesbares Medium, das darauf gespeicherte Operationen enthält, die dann, wenn sie durch wenigstens eine Verarbeitungseinheit (502) verarbeitet werden, ein System veranlassen, das Verfahren nach einem der Ansprüche 1 bis 7 auszuführen.

## Revendications

1. Procédé pour optimiser l'exécution de requêtes sur un magasin de données (406), le procédé comprenant les étapes consistant à :
recevoir (902), par un module de réception (504), une pluralité de requêtes contenant une ou plusieurs métadonnées provenant d'une ou plusieurs machines clientes (402), le module de réception (504) étant configuré dans un serveur (404) qui est connecté par des communications au magasin de données (406) ;
regrouper (904), par un module de regroupement (506), une ou plusieurs requêtes de la pluralité de requêtes reçues par le module de réception (504) dans une ou plusieurs listes de regroupement sur la base des une ou plusieurs métadonnées contenues dans chaque requête de la pluralité de requêtes ; et
exécuter (906), par un module d'exécution (508), chaque liste des une ou plusieurs listes de regroupement comprenant les une ou plusieurs requêtes de la pluralité de requêtes sur le magasin de données pour récupérer des résultats en réponse aux une ou plusieurs requêtes de la pluralité de requêtes regroupées dans les une ou plusieurs listes de regroupement, ladite exécution (906) de chaque liste des une ou plusieurs listes de regroupement comprenant l'exploration une fois seulement sur le magasin de données (406) pour les une ou plusieurs requêtes regroupées dans chaque liste des une ou plusieurs listes de regroupement ;
**caractérisé en ce que**
l'exploration une fois seulement sur le magasin de données (406) pour les une ou plusieurs requêtes regroupées dans chaque liste des une ou plusieurs listes de regroupement comprend les étapes consistant à :
déterminer (1002), par un module d'identifiant de plage d'exploration (802) configuré dans le module d'exécution (508), une plage d'exploration contenant des clés de début et de fin de l'exploration pour chaque liste des une ou plusieurs listes de regroupement sur la base des une ou plusieurs métadonnées contenues dans les une ou plusieurs requêtes regroupées dans chaque liste des une ou plusieurs listes de regroupement ;
lire (1004), par un module d'exploration (804) configuré dans le module d'exécution (508), le magasin de données (406) dans la plage d'exploration déterminée pour récupérer des enregistrements, et expédier les enregistrements récupérés à un diffuseur d'enregistrements (806) lorsque les enregistrements récupérés se trouvent dans la plage d'exploration déterminée, le diffuseur d'enregistrements (806) étant configuré dans le module d'exécution (508) ;
recevoir (1006), par un évaluateur de requête (808), les enregistrements récupérés provenant du diffuseur d'enregistrements (806), ledit évaluateur de requête (808) validant (1008) le fait que les enregistrements récupérés concordent ou non avec les une ou plusieurs métadonnées contenues dans chacune des une ou plusieurs requêtes de la pluralité de requêtes, les enregistrements récupérés reçus par l'évaluateur de requête (808) étant agrégés (1010) par un agrégateur de données (808a) de l'évaluateur de requête (808) lors de la validation des enregistrements récupérés ; et
transmettre (1012), par l'évaluateur de requête (808), les enregistrements agrégés en tant que résultat de requête correspondant aux une ou plusieurs requêtes de la pluralité de requêtes reçues par le module de réception (504).

2. Procédé selon la revendication 1, dans lequel les une ou plusieurs métadonnées contenues dans chaque requête de la pluralité de requêtes sont au moins un élément parmi des dimensions de filtre, des éléments de filtre et des ensembles de données.

3. Procédé selon la revendication 1 ou 2, dans lequel les une ou plusieurs requêtes de la pluralité de requêtes appartenant à un même schéma sont regroupées dans les une ou plusieurs listes de regroupement.

4. Procédé selon l'une quelconque des revendications 1 à 3, dans lequel le regroupement (904) de la pluralité de requêtes dans les une ou plusieurs listes de regroupement est basé sur une similarité entre les une ou plusieurs métadonnées contenues dans chaque requête de la pluralité de requêtes.

5. Procédé selon l'une quelconque des revendications 1 à 4, dans lequel la pluralité de requêtes reçue est mise en file d'attente par le module de réception (504).

6. Procédé selon la revendication 5, dans lequel le regroupement (904) des une ou plusieurs requêtes de la pluralité de requêtes dans les une ou plusieurs listes de regroupement est effectué lors de l'expiration d'une période d'attente prédéfinie définie dans un temporisateur (502a), ledit temporisateur (502a) étant lancé lorsqu'au moins une des une ou plusieurs requêtes reçues est mise en file d'attente.

7. Procédé selon la revendication 1, le procédé comprenant également l'indication d'une prochaine clé idéale par le diffuseur d'enregistrements (806) au module d'exploration (804), la prochaine clé idéale indiquant les prochains enregistrements à lire sur la base des une ou plusieurs métadonnées des une ou plusieurs requêtes regroupées dans la liste de regroupements.

8. Serveur (404) pour l'optimisation de l'exécution de requêtes sur un magasin de données (406), le serveur (404) comprenant :
un module de réception (504), configuré pour recevoir une pluralité de requêtes contenant une ou plusieurs métadonnées provenant d'une ou plusieurs machines clientes (402) ;
un module de regroupement (506), configuré pour regrouper une ou plusieurs requêtes de la pluralité de requêtes reçue du module de réception (504) dans une ou plusieurs listes de regroupement sur la base des une ou plusieurs métadonnées contenues dans chaque requête de la pluralité de requêtes ; et
un module d'exécution (508), configuré pour exécuter chaque liste des une ou plusieurs listes de regroupement comprenant les une ou plusieurs requêtes de la pluralité de requêtes sur le magasin de données (406) pour récupérer des résultats en réponse aux une ou plusieurs requêtes de la pluralité de requêtes regroupées dans les une ou plusieurs listes de regroupement, ladite exécution de chaque liste des une ou plusieurs listes de regroupement comprenant l'exploration une fois seulement sur le magasin de données (406) pour les une ou plusieurs requêtes regroupées dans chaque liste des une ou plusieurs listes de regroupement ;
**caractérisé en ce que**
le module d'exécution (508) comprend :
un module d'identifiant de plage d'exploration (802) servant à déterminer une plage d'exploration contenant des clés de début et de fin de l'exploration pour chaque liste des une ou plusieurs listes de regroupement sur la base des une ou plusieurs métadonnées contenues dans les une ou plusieurs requêtes regroupées dans chaque liste des une ou plusieurs listes de regroupement ;
un module d'exploration (804) configuré pour lire le magasin de données dans la plage d'exploration déterminée pour récupérer des enregistrements et expédier les enregistrements récupérés à un diffuseur d'enregistrements (806) lorsque les enregistrements récupérés se trouvent dans la plage d'exploration déterminée, le diffuseur d'enregistrements (806) étant configuré dans le module d'exécution (508) ; et
un évaluateur de requête (808), qui est configuré pour recevoir les enregistrements récupérés provenant du diffuseur d'enregistrements (806), ledit évaluateur de requête (808) validant le fait que les enregistrements récupérés concordent ou non avec les une ou plusieurs métadonnées contenues dans chacune des une ou plusieurs requêtes de la pluralité de requêtes, les enregistrements récupérés reçus par l'évaluateur de requête (808) étant agrégés par un agrégateur de données (808a) de l'évaluateur de requête (808) lors de la validation des enregistrements récupérés, et configuré pour la transmission, par l'évaluateur de requête (808), des enregistrements agrégés en tant que résultat de requête correspondant aux une ou plusieurs requêtes de la pluralité de requêtes reçues par le module de réception (504).

9. Serveur (404) selon la revendication 8, comprenant également une unité de stockage (510) configurée pour stocker la pluralité de requêtes reçues par le module de réception (504) et les une ou plusieurs listes de regroupement comprenant les une ou plusieurs requêtes de la pluralité de requêtes.

10. Serveur (404) selon la revendication 8 ou 9, dans lequel le module de réception (504) est un analyseur qui met en file d'attente la pluralité de requêtes.

11. Serveur (404) selon l'une quelconque des revendications 8 à 10, dans lequel le regroupement, par le module de regroupement (506), des une ou plusieurs requêtes de la pluralité de requêtes dans les une ou plusieurs listes de regroupement est effectué lors de l'expiration d'une période d'attente prédéfinie définie dans un temporisateur (502a), ledit temporisateur (502a) étant lancé lorsqu'au moins une des une ou plusieurs requêtes reçues est mise en file d'attente par le module de réception (504).

12. Serveur (404) selon l'une quelconque des revendications 8 à 11, dans lequel le magasin de données (406) est sélectionné dans au moins un élément parmi un fichier plat, un cube de données de traitement analytique en ligne hiérarchique, un cube multidimensionnel, un magasin de données relationnel, un magasin de données de traitement analytique en ligne (OLAP) et un fichier Excel.

13. Support non transitoire lisible par ordinateur sur lequel sont stockées des opérations qui, lorsqu'elles sont traitées par au moins une unité de traitement (502), amènent un système à mettre en œuvre le procédé selon l'une quelconque des revendications 1 à 7.
